# FASCICULE DE BREVET EUROPEEN

(11) **EP 2 607 743 B1**
(45) Date de publication et mention de la délivrance du brevet: **25.02.2015**
(21) Numéro de dépôt: 12199187.1
(22) Date de dépôt: 21.12.2012
(51) Int. Cl.: F16F 15/14, F16H 45/02

(54) **Dispositif de filtration comportant des moyens d'amortissement par frottement**
DÄMPFER MIT REIBUNGSDAMPFUNGSMITTELN
DAMPING DEVICE WITH FRICTION DAMPING MEANS.

(30) Priorité: 22.12.2011 FR 1162280
(43) Date de publication de la demande: 26.06.2013
(73) Titulaire: Valeo Embrayages, 80009 Amiens Cedex 2 (FR)
(72) Inventeur: Verhoog, Roel, 60190 Gournay sur Aronde (FR); Hennebelle, Michaël, 62150 Houdain (FR)
(74) Mandataire: Tran, Chi-Hai

(56) Documents cités:
- DE-A1- 19 831 155
- DE-A1- 19 954 274
- DE-A1-102011 012 606
- DE-A1-102011 100 895

## Description

La présente invention concerne un dispositif de filtration comportant des moyens d'amortissement par frottement.

La présente invention concerne plus particulièrement un dispositif de filtration de type oscillateur pendulaire, notamment pour une transmission de véhicule automobile, ayant un axe de rotation et comportant :
- au moins un élément de support apte à être entraîné en rotation autour de l'axe de rotation,
- au moins une masse apte à osciller, par rapport audit élément de support, dans un plan d'oscillation orthogonal à l'axe de rotation,
- des moyens de guidage de la masse par rapport à l'élément de support intervenant entre ledit au moins un élément de support et ladite au moins une masse, et
- des moyens de butée de fin de course aptes à limiter, en fonctionnement, les oscillations de ladite au moins une masse par rapport audit au moins un élément de support. On connaît de l'état de la technique de tels dispositifs de filtration qui, encore appelés oscillateur pendulaire ou pendule, équipant notamment mais non exclusivement la transmission d'un véhicule automobile.

Le document DE 10 2011 100 895 A1 qui est considéré comme l'état de l'art le plus proche divulgue toutes les caractéristiques du preambule de la revendication 1

Dans une transmission de véhicule automobile, on associe généralement au moins un système d'amortissement de torsion à un embrayage apte à relier sélectivement le moteur à la boîte de vitesses, tels qu'un embrayage à friction ou un appareil d'accouplement hydrocinétique comportant un embrayage de verrouillage, et cela afin de filtrer les vibrations dues aux acyclismes du moteur.

En effet, un moteur à explosion présente des acyclismes du fait des explosions se succédant dans les cylindres du moteur, lesdits acyclismes variant notamment en fonction du nombre de cylindres.

Les moyens amortisseurs d'un système d'amortissement de torsion ont par conséquent pour fonction de filtrer les vibrations engendrées par les acyclismes et interviennent avant la transmission du couple moteur à la boîte de vitesses.

A défaut, des vibrations pénétrant dans la boîte de vitesse y provoqueraient en fonctionnement des chocs, bruits ou nuisances sonores particulièrement indésirables.

C'est l'une des raisons pour lesquelles, on utilise un ou plusieurs moyens d'amortissement aptes à filtrer les vibrations à au moins une fréquence déterminée.

Dans le domaine des transmissions, la recherche de l'obtention d'une filtration toujours plus performante a conduit pour certaines applications à adjoindre un dispositif de filtration de type oscillateur pendulaire aux systèmes d'amortissement ou amortisseurs conventionnellement mis en oeuvre, tant dans les embrayages à friction que dans les appareils d'accouplement hydrocinétique de véhicule automobile.

Un dispositif de filtration de type oscillateur pendulaire comporte au moins une masse, généralement plusieurs masses agencées autour de l'axe de rotation de l'arbre moteur et qui sont chacune libre d'osciller par rapport à au moins un élément de support.

En réaction aux irrégularités de rotation, lesdites masses se déplacent de manière à ce que le centre de gravité de chacune des masses oscille autour d'un axe sensiblement parallèle à l'axe de rotation de l'arbre moteur.

La position radiale du centre de gravité de chacune des masses par rapport à l'axe de rotation de l'arbre moteur, ainsi que la distance de ce centre de gravité par rapport à l'axe fictif d'oscillation, sont établies de manière à ce que, sous l'effet des forces centrifuges, la fréquence d'oscillation de chacune des masses soit proportionnelle à la vitesse de rotation de l'arbre moteur, ce multiple pouvant par exemple prendre une valeur proche du rang de l'harmonique prépondérant des vibrations responsables des fortes irrégularités de rotation au voisinage du ralenti.

Un tel dispositif de filtration comporte des moyens de guidage des masses qui interviennent en fonctionnement lorsque lesdites masses oscillent. Un tel dispositif de filtration comporte encore des moyens de butée de fin de course qui sont destinés à limiter les oscillations des masses et qui interviennent lorsque, dans certaines conditions particulières de fonctionnement, les masses oscillent circonférentiellement au-delà d'une position angulaire déterminée.

Selon le type de conception du dispositif de filtration, la fonction de butée de fin de course des masses est susceptible d'être réalisée par différents moyens.

La fonction de butée de fin de course est par exemple assurée par des moyens, tels que des entretoises, qui relient axialement les deux parties d'une masse ou les deux éléments de support selon la conception.

Généralement, les moyens de butée de fin de course interviennent directement de sorte que, lors de la venue en butée, les chocs provoquent des contraintes mécaniques internes dans les pièces constitutives du dispositif de filtration qui sont à l'origine de détériorations notamment préjudiciables à la durée de fonctionnement du dispositif.

De plus, les moyens de butée sont constitués par une pièce métallique, telle qu'une entretoise, qui en entrant en contact avec une autre pièce métallique, telle que l'élément de support dans une ouverture duquel se déplace l'entretoise, va provoquer l'émission de bruits indésirables imputables au contact "métal-métal" survenant lors de la venue en butée desdits moyens associés à chaque masse.

Le but de la présente invention est notamment de proposer une solution pour réaliser une fonction d'amortissement qui, en fonctionnement du dispositif de filtration, interviennent avant les moyens de butée de fin de course d'une masse pour réduire l'énergie cinétique de la masse et ce faisant diminuer l'intensité des contraintes survenant lors des chocs avec lesdits moyens de butée.

Dans ce but, l'invention propose un dispositif de filtration du type décrit précédemment, **caractérisé en ce que** le dispositif de filtration comporte des moyens d'amortissement qui sont aptes à produire sélectivement un effet d'amortissement par friction pour dissiper par frottement mécanique au moins une partie de l'énergie de ladite au moins une masse.

Grâce à l'invention, on améliore les performances du dispositif de filtration en ralentissant, progressivement ou non, ladite au moins une masse avant la venue en butée contre les moyens de butée de fin de course associés, les moyens d'amortissement permettant de diminuer l'intensité des chocs et d'atténuer les bruits.

De préférence, les moyens d'amortissement sont associés aux moyens de butée que le dispositif de filtration comporte pour les masses.

Avantageusement, les moyens d'amortissement par frottement mécanique interviennent sélectivement dès que ladite au moins une masse en mouvement oscille circonférentiellement au-delà d'une position angulaire déterminée pour freiner, pour ralentir ladite masse oscillante en dissipant alors par frottement au moins une partie de son énergie cinétique et cela avant l'intervention des moyens de butée de fin de course.

Selon l'invention, on réalise une fonction d'amortissement par frottement ou friction permettant de réduire considérablement, du fait de l'énergie cinétique de la masse ainsi dissipée, les détériorations provoquées par les contraintes mécaniques au moment des chocs lors de la venue en butée d'une masse avec les moyens de butée de fin de course associés.

Avantageusement, ledit au moins un organe déformable élastiquement formant les moyens d'amortissement par frottement selon l'invention est apte à assurer la fonction d'amortissement de manière répétée avec une grande fiabilité et durablement dans le temps.

Avantageusement, le nombre d'organes déformables élastiquement est déterminé en fonction de l'amortissement souhaité et notamment de l'application pour un dispositif de filtration donné.

De même l'inclinaison, par rapport au plan d'oscillation, des surfaces de frottement intervenant pour dissiper l'énergie est susceptible de varier entre 30° et 60° notamment.

De préférence, l'inclinaison des surfaces de frottement intervenant pour dissiper l'énergie et produire l'effet d'amortissement par friction est sensiblement égale à 45°, une telle valeur d'inclinaison permet d'éviter d'une part un accostage trop dur et, d'autre part, un risque de coincement après la course de compression.

Selon d'autres caractéristiques du dispositif de l'invention :
- lesdits moyens d'amortissement comportent au moins un organe déformable élastiquement qui est apte à occuper respectivement au moins un état d'attente et un état comprimé et, lorsque ladite au moins une masse oscille circonférentiellement au-delà d'une position angulaire déterminée, ledit au moins un organe déformable élastiquement est comprimé, entre une première position et une deuxième position, suivant une course de compression au cours de laquelle ledit organe dissipe de l'énergie par frottement mécanique de manière à produire ledit effet d'amortissement par friction de ladite au moins une masse ;
- oscillant au-delà d'une position angulaire déterminée, ladite au moins une masse provoque la compression dudit au moins un organe déformable élastiquement suivant une course de compression qui est perpendiculaire au plan d'oscillation de ladite au moins une masse ;
- ledit au moins un organe déformable élastiquement est comprimé directement par ladite au moins une masse ;
- ledit au moins un organe déformable élastiquement est comprimé par une pièce intermédiaire avec laquelle coopère ladite au moins une masse ;
- ladite au moins une masse comporte au moins une face oblique qui est destinée à coopérer avec ledit au moins un organe déformable élastiquement ou ladite pièce intermédiaire ;
- ladite au moins une masse comporte une partie saillante apte à coopérer avec la pièce intermédiaire et ladite pièce intermédiaire, montée mobile perpendiculairement au plan d'oscillation de ladite au moins une masse, est apte à comprimer ledit au moins un organe déformable élastiquement suivant la course de compression ;
- ledit au moins un organe déformable élastiquement est lié en déplacement audit au moins un élément de support ;
- ledit au moins un organe déformable élastiquement est lié en déplacement à ladite au moins une masse ;
- ledit au moins un organe déformable élastiquement est constitué par au moins une rondelle élastique tronconique ou une lame élastique,
- le dispositif de filtration comporte un premier organe déformable élastiquement et un deuxième organe déformable élastiquement.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en perspective qui représente un système d'amortissement comportant un dispositif de filtration selon une première conception et qui illustre un premier mode de réalisation des moyens d'amortissement par frottement selon l'invention qui sont associés aux moyens de butée de fin de course des masses ;
- les figures 2 et 3 sont respectivement une vue en perspective, en éclaté, et une vue en coupe d'un système d'amortissement selon la figure 1 ;
- les figures 4 et 5 sont des vues en coupe qui représentent en détail le premier mode de réalisation des moyens d'amortissement aptes à réaliser une dissipation d'énergie par frottement et qui illustrent respectivement l'organe déformable élastiquement à l'état d'attente et à l'état comprimé ;
- les figures 6 et 7 sont des vues en coupe qui, analogues aux figures 4 et 5, représentent en détail un deuxième mode de réalisation des moyens d'amortissement et qui illustrent respectivement une paire d'organes déformables élastiquement à l'état d'attente et à l'état comprimé par l'intermédiaire d'une pièce interposée avec laquelle coopère la masse ;
- les figures 8 et 9 sont des vues en coupe qui, analogues aux figures 4 et 5, représentent en détail un troisième mode de réalisation des moyens d'amortissement et qui illustrent respectivement un organe déformable élastiquement à l'état d'attente et à l'état comprimé par l'intermédiaire d'une pièce mobile interposée avec laquelle coopère la masse et contre laquelle la masse vient buter en fin de course ;
- les figures 10 et 11 sont des vues en coupe qui, analogues aux figures 8 et 9, représentent en détail une variante du troisième mode de réalisation dans laquelle les moyens d'amortissement sont doublés ;
- la figure 12 est une vue en perspective qui représente en détail les moyens d'amortissement selon la variante des figures 10 et 11 et qui illustre la partie saillante de la masse formant une protubérance destinée à coopérer avec chacune des pièces intermédiaires mobiles pour comprimer les deux organes déformables élastiquement ;
- les figures 13 et 14 sont des vues en perspective qui représentent un dispositif de filtration selon la première conception et qui illustre un quatrième mode de réalisation des moyens d'amortissement selon l'invention ;
- les figures 15 et 16 sont des vues de face qui représentent en détail un dispositif de filtration selon les figures 13 et 14 et qui illustrent respectivement les moyens d'amortissement selon l'invention à l'état d'attente et à l'état comprimé ;
- les figures 17 et 18 sont des vues en perspective qui représentent, respectivement assemblé et en éclaté, un dispositif de filtration selon une deuxième conception et qui illustre un cinquième mode de réalisation des moyens d'amortissement selon l'invention ;
- les figures 19 et 20 sont des vues en coupe qui représentent en détail le cinquième mode de réalisation des moyens d'amortissement selon les figures 17 et 18 et qui illustrent respectivement, à l'état d'attente et à l'état comprimé, une paire d'organes déformables élastiquement associés chacun à l'une des deux masselottes formant ladite au moins masse du dispositif.

Dans la suite de la description et les revendications, on utilisera à titre non limitatif et afin d'en faciliter la compréhension, les "externe" et "interne" ainsi que les orientations "axial" et "radial" pour désigner, selon les définitions données dans la description, des éléments du dispositif de filtration.

Par convention, l'orientation "radiale" est dirigée orthogonalement à l'axe (X) de rotation du dispositif de filtration déterminant l'orientation "axiale" et de l'intérieur vers l'extérieur en s'éloignant dudit axe, l'orientation "circonférentielle" est dirigée orthogonalement à l'axe du dispositif de filtration et orthogonalement à la direction radiale.

Les termes "externe" et "interne" sont utilisés pour définir la position relative d'un élément par rapport à un autre, par référence à l'axe de rotation du dispositif de filtration, un élément proche de l'axe est ainsi qualifié d'interne par opposition à un élément externe situé radialement en périphérie.

Pour la suite de la description, des éléments présentant des fonctions similaires, identiques ou analogues seront désignés par des mêmes numéros de référence.

L'invention concerne un dispositif 10 de filtration de type oscillateur pendulaire qui est notamment apte à équiper une transmission de véhicule automobile.

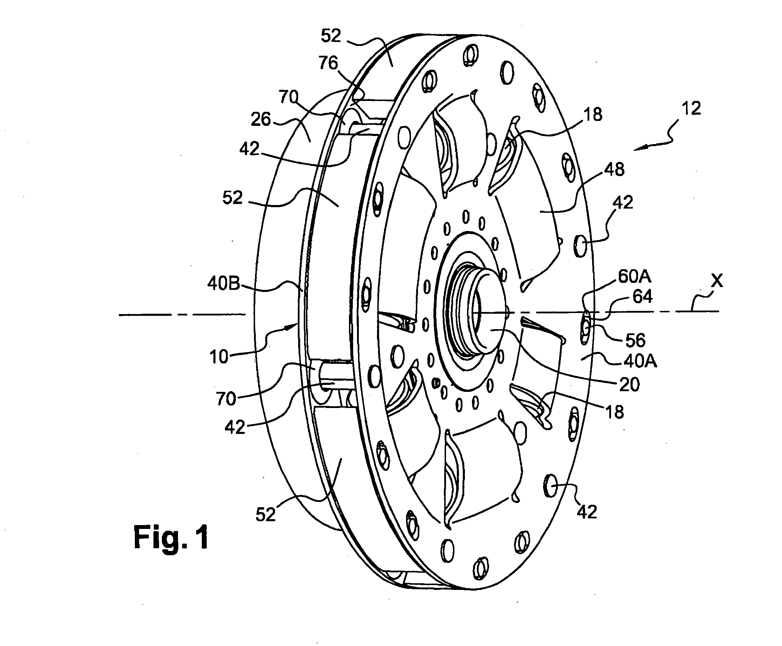

On a représenté aux figures 1 à 3, un tel dispositif 10 de filtration qui est associé à un système 12 d'amortissement lequel est plus particulièrement destiné à équiper un appareil d'accouplement hydrocinétique, l'ensemble ayant un axe X de rotation.

Un tel appareil d'accouplement hydrocinétique comporte encore un embrayage de verrouillage (ou *"lock-up"* en anglais) et un convertisseur de couple qui, pourvu d'une turbine, est associé à une boîte de vitesses dite automatique. Le système 12 d'amortissement intervenant principalement, en dehors du mode de fonctionnement convertisseur de l'appareil, lors de l'accouplement des arbres menant et mené par l'embrayage de verrouillage.

On rappellera tout d'abord les principaux éléments du système 12 d'amortissement dont la structure, comme le fonctionnement, sont connus de l'état de la technique et ne seront en conséquence pas décrits de manière détaillée.

Le système 12 d'amortissement représenté aux figures 1 à 3 ne constitue qu'un exemple de réalisation donné à titre non limitatif et le dispositif 10 de filtration selon l'invention pourrait être mis en oeuvre seul, à tout le moins indépendamment d'un tel système 12.

Le système 12 d'amortissement comporte au moins un élément 16 d'entrée et au moins un élément 14 de sortie entre lesquels sont interposés des organes 18 élastiques à action circonférentielle.

Le système 12 d'amortissement est destiné à assurer une fonction d'amortissement des vibrations lors de l'accouplement d'un premier arbre moteur (non représenté) formant l'arbre menant et d'un deuxième arbre de boîte de vitesses (non représenté) formant l'arbre mené, lesdits arbres étant avantageusement coaxiaux.

Le système 12 d'amortissement comporte un voile 14 radial qui, formant ledit élément de sortie, est destiné à être lié en rotation au second arbre moteur par l'intermédiaire d'un moyeu 20.

De préférence, le voile 14 de sortie est lié en rotation avec le moyeu 20 par l'intermédiaire de rivets (non représentés).

Le voile 14 de sortie présente par exemple trois bras 22 radiaux qui sont répartis circonférentiellement de manière régulière autour de l'axe X de rotation, soit à 120° les uns des autres. Chacun des bras 22 s'étend radialement en saillie vers l'extérieur à partir du bord 24 périphérique extérieur du voile 14 de sortie.

Le système 12 d'amortissement comporte un élément 16 d'entrée de couple qui est respectivement formé par une première rondelle 16A d'entrée et par une deuxième rondelle 16B d'entrée. Les rondelles 16A, 16B d'entrée sont agencées axialement de part et d'autre du voile 14 de sortie, respectivement à l'avant et à l'arrière.

La rondelle 16B d'entrée est liée en rotation avec la rondelle 16A d'entrée, par exemple par l'intermédiaire de pattes axiales (non représentées).

Les deux rondelles 16A, 16B d'entrées sont liées en rotation à une pièce de liaison 26 de l'embrayage de verrouillage, la pièce de liaison 26 comporte ici sur sa partie d'orientation axiale des cannelures destinées à coopérer par engrènement avec des disques de friction dans le cas d'un embrayage de verrouillage de type multi-disques.

La rondelle 16B d'entrée arrière est fixée à la pièce de liaison 26 par l'intermédiaire de rivets 25.

Chaque rondelle 16A, 16B d'entrée présente un flasque radial qui est pourvu d'un passage central pour permettre le passage de l'arbre moteur et du moyeu 20 du voile 14 de sortie.

Chaque rondelle 16A, 16B d'entrée comporte trois bras 28 extérieurs qui sont agencés en coïncidence avec les bras 22 de poussée du voile 14 de sortie.

Lorsque les deux rondelles 16A, 16B d'entrée sont assemblées, leurs flasques sont écartés d'une distance axiale suffisante pour permettre au voile 14 de sortie de tourner sans frottement entre les deux rondelles 16A, 16B d'entrée.

La rondelle 16A d'entrée avant est montée tournante librement sur un palier 30 comportant à cet effet une face 32 cylindrique extérieure de guidage. Le palier 30 est lui-même monté tournant sur une face 34 cylindrique extérieure d'un tronçon avant du moyeu 20 du voile 14 de sortie.

Les déplacements axiaux du palier 30 sont respectivement limités vers l'arrière par une face 36 d'épaulement du moyeu 20 et vers l'avant par un anneau 38 élastique qui est monté sur le moyeu 20.

De manière non limitative, le système 12 d'amortissement comporte ici six organes élastiques 18 à action circonférentielle, formés par exemple par des ressorts hélicoïdaux.

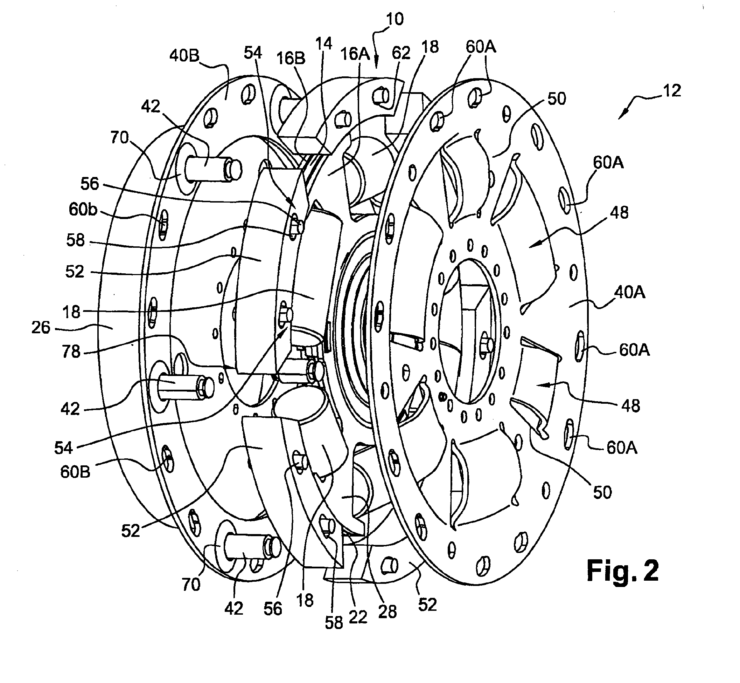

Comme cela est visible sur l'éclaté de la figure 2, les organes élastiques 18 sont agencés en une rangée circulaire autour du bord périphérique 24 du voile 14. Plus précisément, les organes élastiques 18 sont ici répartis en trois groupes de deux organes élastiques 18.

Les organes élastiques 18 de chaque groupe sont logés circonférentiellement en série, c'est-à-dire bout à bout, entre deux bras 22 consécutifs du voile 14 de sortie.

Les deux organes élastiques 18 de chaque groupe étant montés en série, les deux extrémités en vis-à-vis de ces deux organes élastiques 18 sont susceptibles de prendre appui l'une sur l'autre lors de la transmission d'un couple entre les rondelles 16A, 16B d'entrée et le voile 14 de sortie.

Pour que les organes élastiques 18 soient sollicités sensiblement selon leur axe principal circonférentiel, il est connu d'équiper le système 12 d'amortissement de moyens de phasage.

Les moyens de phasage sont ici formés d'une première rondelle 40A de phasage et d'une deuxième rondelle 40B de phasage qui est agencée parallèlement à la première rondelle 40A de phasage.

Les rondelles 40A, 40B de phasage sont agencées axialement de part et d'autre des rondelles 16A, 16B d'entrée et des organes élastiques 18, respectivement à l'avant pour la rondelle 40A et à l'arrière pour la rondelle 40B.

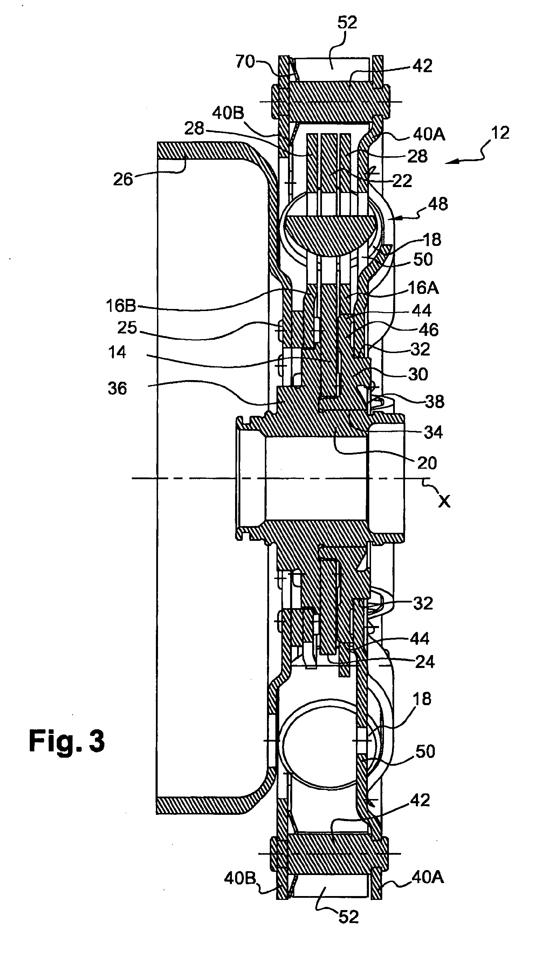

Comme illustré aux figures 1 et 3, la rondelle 40B de phasage arrière est fixée à la rondelle 40A de phasage avant par l'intermédiaire d'entretoises 42 réparties circonférentiellement et qui s'étendent axialement entre lesdites rondelles 40A, 40B de phasage.

Chaque extrémité d'une entretoise 42 est fixée à la rondelle 40A, 40B de phasage associée, ici par déformation de ladite extrémité à la manière d'un rivet.

Les entretoises 42 maintiennent un écartement axial constant entre les deux rondelles 40A, 40B de phasage et lorsque lesdites rondelles 40A, 40B de phasage sont assemblées, leurs flasques sont écartés d'une distance suffisante pour permettre aux rondelles 16A, 16B d'entrée de tourner sans frottement.

La distance d'écartement axial entre les deux rondelles 40A, 40B de phasage est inférieure au diamètre des organes élastiques 18.

Les rondelles 40A, 40B de phasage sont montées libres en rotation par rapport au voile 14 de sortie, d'une part, et par rapport aux rondelles 16A, 16B d'entrée, d'autre part.

La rondelle 40A de phasage avant est montée tournante librement sur une deuxième face 44 cylindrique de guidage du palier 30. La deuxième face 44 est décalée axialement vers avant par rapport à la première face 32 cylindrique de guidage.

La deuxième face 44 cylindrique de guidage présente un diamètre inférieur à celui de la première face 32 cylindrique de guidage de sorte que le palier 30 est étagé. Une face 46 radiale d'épaulement tournée vers l'avant sépare les deux faces 32 et 44 cylindriques de guidage.

La rondelle 40A de phasage est appuyée axialement vers l'arrière contre cette face 46 d'épaulement pour positionner axialement les rondelles 40A, 40B de phasage par rapport aux rondelles 16A, 16B d'entrée.

La rondelle 40A de phasage est ajourée de six fenêtres 48 dont chacune est agencée en coïncidence avec l'un des organes élastique 18.

Les fenêtres 48 sont séparées circonférentiellement les unes des autres par des pattes 50 radiales de phasage qui sont représentées à la figure 3. Chaque patte 50 de phasage est interposée circonférentiellement entre les deux organes élastiques 18 en série de chaque groupe.

Lors du fonctionnement du système 12 d'amortissement, les organes élastiques 18 sont comprimés entre les bras 28 des rondelles 16A, 16B d'entrée et les bras 22 de poussée du voile 14 de sortie de manière à amortir les variations de couple.

Les rondelles 16A, 16B d'entrée tournent d'un angle déterminé autour de l'axe X par rapport au voile 14 de sortie en provoquant la compression des deux organes élastiques 18 de chaque groupe. Les pattes 50 de phasage de la rondelle 40A de phasage transmettent l'effort de compression d'un organe élastique 18 vers l'autre.

Du fait de cette compression, les rondelles 40A, 40B de phasage tournent de la moitié de l'angle déterminé par rapport au voile 14 de sortie.

De préférence, les rondelles 40A, 40B de phasage forment des éléments de guidage pour les organes élastiques 18. En effet, les fenêtres 48 forment des logements aptes à recevoir les organes élastiques 18 et à les maintenir en position axialement et radialement.

Le système 12 d'amortissement constitue avantageusement des moyens principaux d'amortissement tandis que le dispositif 10 de filtration qui lui est associé constitue des moyens secondaires d'amortissement.

On décrira maintenant le dispositif 10 de filtration et, conformément à l'invention, des moyens d'amortissement par frottement mécanique aptes à réaliser un effet d'amortissement par friction d'une masse d'un tel dispositif 10 de filtration avant l'intervention de moyens de butée de fin course associés à la masse.

Le dispositif 10 de filtration est plus particulièrement visible aux figures 1 et 2 et ce dispositif 10 de filtration est encore appelé oscillateur pendulaire ou plus communément pendule.

Le dispositif 10 de filtration présente un axe X de rotation qui est ici commun avec celui du système 12 d'amortissement décrit précédemment.

Le dispositif 10 de filtration comporte principalement au moins un élément de support apte à être entraîné en rotation autour de l'axe X de rotation et au moins une masse 52 apte à osciller, par rapport audit élément de support, dans un plan d'oscillation orthogonal à l'axe X de rotation.

On distingue au moins deux conceptions d'un tel dispositif 10 de filtration selon notamment que les masses sont ou non en deux parties.

Selon une première conception du dispositif 10 de filtration, ladite au moins une masse 52 est agencée axialement entre deux éléments de support, lesdits éléments de support étant dans l'exemple de réalisation constitués par les rondelles 40A et 40B de phasage du système 12 d'amortissement.

Dans l'exemple de réalisation, le dispositif 10 de filtration comporte des masses 52 qui sont réparties circonférentiellement de manière régulière autour de l'axe X de rotation de manière à équilibrer le dispositif 10 de filtration.

Les masses 52 sont agencées à la périphérie radiale des rondelles 40A et 40B de phasage formant les deux éléments de support de manière à être soumises à une force centrifuge maximale lors de la rotation du dispositif 10 de filtration.

Dans la première conception représentée sur les figures 1 à 3, le dispositif 10 de filtration comporte par exemple six masses 52.

Les six masses 52 sont agencées en cercle radialement à l'extérieur de la rangée circulaire d'organes élastiques 18 que les masses 52 entourent.

L'écartement constant entre les deux rondelles 40A, 40B de phasage assuré par les entretoises 42 est suffisant pour que les masses 52 puissent osciller sans contact avec les rondelles 40A, 40B de phasage dans le plan d'oscillation orthogonal à l'axe X de rotation.

Les masses 52 présentent globalement une forme en arc de cercle et s'étendent circonférentiellement sur un angle d'un peu moins de soixante degrés (60°) de manière que le contour extérieur de chaque masse 52 épouse le bord périphérique extérieur des rondelles 40A, 40B de phasage.

Les six masses 52 du dispositif 10 de filtration sont identiques et sont montées de manière similaire dans le système 12 d'amortissement de sorte qu'une seule masse 52 sera décrite par la suite, la description valant à l'identique pour les autres masses 52.

Le dispositif 10 de filtration comporte des moyens 54 de guidage de la masse 52 par rapport aux rondelles 40A, 40B de phasage, les moyens 54 de guidage interviennent entre la masse 52 et les deux rondelles 40A, 40B formant les éléments de support qui sont agencées axialement de part et d'autre de la masse 52.

Les moyens 54 de guidage de la masse 52 sont par exemple constitués par au moins un élément de roulement, ici par une paire de rouleaux 56 de manière à obtenir un dispositif 10 de filtration de type pendule bifilaire.

Chaque rouleau 56 s'étend axialement à travers la masse 52 qui comporte pour ce faire une ouverture 58 de passage ayant globalement une forme de fente oblongue.

Les extrémités axiales d'un rouleau 56 sont reçues dans des ouvertures respectivement référencées 60A pour la rondelle 40A de phasage et 60B pour la rondelle 40B de phasage.

De préférence, l'ouverture 58 dans la masse 52 présente un bord 62 radialement intérieur qui est concave vers l'extérieur. Le rouleau 56 de guidage est destiné à rouler le long du bord 62 lorsque la masse 52 est sollicitée radialement vers l'extérieur sous l'effet de la force centrifuge.

De même, l'ouverture 60A, 60B de chaque rondelle de phasage 40A, 40B présente un bord 64 radialement extérieur qui est concave vers l'intérieur, c'est-à-dire dont la concavité est inverse par rapport à celle du bord 62 de l'ouverture 58 de la masse 52.

Le rouleau 56 de guidage est susceptible de rouler le long dudit bord 64 extérieur lorsque la masse 52 est sollicitée radialement vers l'extérieur sous l'effet de la force centrifuge. La masse 52 est ainsi guidée lorsqu'elle oscille par l'ensemble de ces moyens 54 de guidage.

Le rouleau 56 peut comporter des moyens d'arrêt axiaux (non représentés) disposés axialement de part et d'autre du tronçon central du rouleau 56 qui est reçu dans l'ouverture 58 de la masse 52 de manière à limiter la capacité de déplacement axial du rouleau 56.

De préférence, les moyens d'arrêt d'un rouleau 56 sont formés par deux collerettes s'étendant radialement tout autour du rouleau 56 et aptes à venir en butée contre la masse 52, autour de l'ouverture 58, afin de limiter le déplacement axial du rouleau 56 à un jeu axial déterminé et interdire au rouleau 56 de sortir de ladite ouverture 58.

Les rondelles 40A et 40B de phasage sont reliées axialement entre elles par les entretoises 42 de liaison et sont de préférence agencées circonférentiellement entre deux masses 52 consécutives.

Avantageusement, les masses 52 ne sont donc pas traversées par lesdites entretoises 42 ce qui aurait sinon pour conséquence d'en réduire d'autant la masse totale.

Le dispositif 10 de filtration comporte des moyens 66 de butée de fin de course aptes à limiter circonférentiellement, en fonctionnement, les oscillations de ladite au moins une masse 52 par rapport aux rondelles 40A, 40B de phasage formant des éléments de support.

Dans le premier mode de réalisation selon l'invention, les moyens 66 de butée de fin de course sont formés par les entretoises 42 qui constituent pour chacune des masses 52 des butées franches disposées circonférentiellement de part et d'autre de chaque masse 52.

En fonctionnement, une masse 52 est susceptible de venir buter contre l'une et/ou l'autre des entretoises 42 adjacentes lorsque la masse 52 oscille au-delà d'une position angulaire déterminée.

Conformément à l'invention, le dispositif 10 de filtration comporte des moyens 70 d'amortissement qui sont aptes à produire sélectivement un effet d'amortissement par friction pour dissiper par frottement mécanique au moins une partie de l'énergie de ladite au moins une masse 52.

Avantageusement, les moyens 70 d'amortissement par frottement mécanique sont associés aux moyens 66 de butée et interviennent avant lesdits moyens 66 de butée de fin de course.

La masse 52 comporte une face 68 qui est destinée à entrer sélectivement en contact avec une face 72 de butée des moyens 66 de butée, lorsque oscillant circonférentiellement au-delà de la position angulaire déterminée la masse 52 est arrêtée par les moyens 66 de butée de fin de course.

Avantageusement, les moyens 70 d'amortissement interviennent avant les moyens 66 de butée de fin de course pour réduire par frottement l'énergie cinétique d'une masse 52 et ainsi, grâce à l'effet d'amortissement par friction produit par les moyens 70 d'amortissement, amortir le choc de la masse 52 contre les moyens 66 de butée de fin de course et ainsi atténuer également les bruits survenant alors.

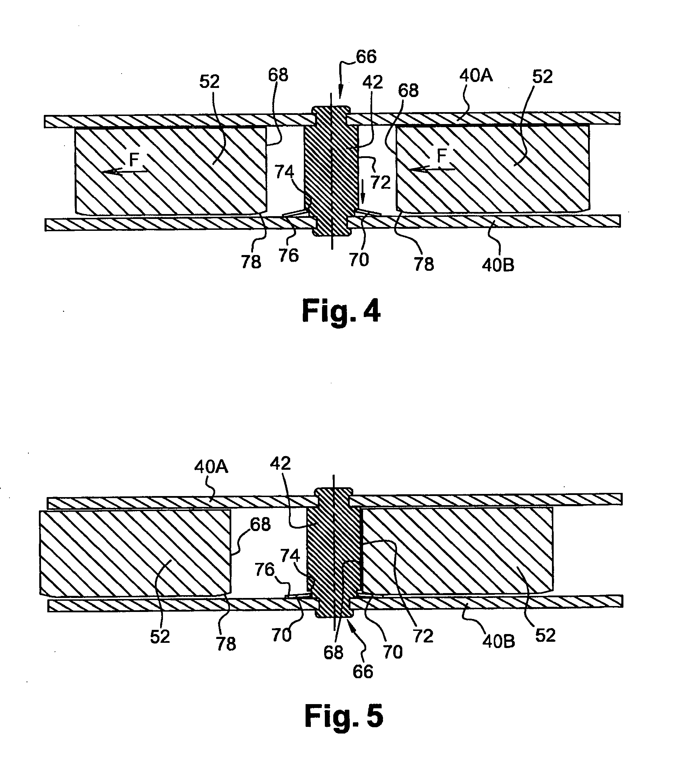

Dans le premier mode de réalisation et tel que représenté sur les figures 4 et 5, ladite face 72 de butée appartient à l'entretoise 42 qui forme par conséquent lesdits moyens 66 de butée de fin de course.

Avantageusement, les moyens 70 d'amortissement par frottement mécanique du dispositif 10 de filtration comportent au moins un organe 70 déformable élastiquement qui est apte à occuper respectivement au moins un état d'attente et un état comprimé. En variante, les moyens d'amortissement 70 comportent deux organes 70 déformables élastiquement (non représenté).

Les moyens 70 d'amortissement sont associés aux moyens 66 de butée de fin de course, soit ici ledit au moins un organe 70 déformable élastiquement qui est associé à l'une des entretoises 42.

De préférence, ledit au moins un organe 70 déformable élastiquement est une rondelle élastique qui présente centralement une ouverture qui est traversée par l'entretoise 42. Dans la variante présentant deux organes 70 déformables élastiquement, une première rondelle élastique et une deuxième rondelle élastique sont traversées toutes les deux par l'entretoise 42 et disposées chacune à une extrémité de l'entretoise 42.

De préférence, la rondelle 70 élastique est de forme tronconique et légèrement précontrainte lorsqu'elle occupe son état d'attente de manière à demeurer dans une première position qui est illustrée sur la figure 4, y compris en fonctionnement lorsque le dispositif 10 est entraîné en rotation sans que n'interviennent pour autant lesdits moyens d'amortissement.

Dans la première position, la rondelle 70 élastique est immobilisée axialement, d'une part, contre un épaulement 74 de l'entretoise 42 et, d'autre part, contre une face 76 de la rondelle 40B de phasage.

La rondelle 70 élastique formant ledit au moins un organe déformable élastiquement est maintenue dans cette première position par l'entretoise 42 et la rondelle 40B de phasage, la rondelle 70 élastique est par conséquent liée en déplacement, ici en rotation, audit au moins un élément de support formé par la rondelle 40B de phasage.

Dans la première position, la rondelle 70 élastique est apte à être sollicitée en compression, axialement suivant la flèche représentée sur la figure 4, à l'encontre de sa charge.

Lorsque une masse 52 oscille circonférentiellement au-delà d'une position angulaire déterminée, ledit au moins un organe 70 déformable élastiquement formé par la rondelle est comprimé sélectivement, entre la première position (figure 4) et une deuxième position qui est illustrée sur la figure 5.

Avantageusement, la deuxième position de l'organe 70 déformable élastiquement correspond à la butée de fin de course pour la masse 52.

Le passage de la première position à la deuxième position détermine une course de compression au cours de laquelle ladite rondelle 70 élastique produit un effet d'amortissement par friction par coopération avec la masse 52 la comprimant et ce faisant provoque par frottement une dissipation d'ai moins une partie de l'énergie cinétique de la masse 52.

Dans ce premier mode de réalisation, la rondelle 70 élastique tronconique est comprimée directement par la masse 52 elle-même.

Tel qu'illustré sur les figures 4 et 5, en oscillant au-delà d'une position angulaire déterminée suivant la direction de la flèche F, chaque masse 52 vient directement au contact avec la rondelle 70 élastique adjacente et attaque la rondelle 70 élastique qui, tronconique, forme une rampe pour la masse 52.

La masse 52 en mouvement provoque la compression de la rondelle 70 élastique suivant une course axiale de compression qui, dans ce premier mode de réalisation, est perpendiculaire au plan d'oscillation de la masse 52.

La dissipation d'énergie par frottement mécanique pour obtenir l'effet d'amortissement recherché de la masse 52 résulte par conséquent de la friction, des frottements s'opérant entre la masse 52 et la rondelle 70 élastique lors de la course de compression.

C'est la raison pour laquelle, on recherche une coopération de formes entre la masse 52 et la rondelle 70 élastique qui permettent de générer entre elles un maximum de frottements mécaniques et donc d'effet d'amortissement par friction.

Avantageusement, la partie de la masse 52 destinée à coopérer avec la rondelle 70 élastique pour la comprimer jusqu'à sa deuxième position, comporte au moins une face 78 oblique dont l'inclinaison est complémentaire de l'inclinaison présentée par la rondelle 70 élastique de forme tronconique.

De préférence, la face 78 oblique est en coupe globalement parallèle à la face tronconique externe de la rondelle 70 élastique.

La charge de la rondelle 70 élastique s'oppose à la compression et à la poursuite du déplacement de la masse 52 suivant la flèche F et participe au maintien du contact de friction s'opérant entre la masse 52 et la rondelle 70 élastique.

L'angle d'inclinaison de la face 78 oblique de la masse 52 comme celui du cône de la rondelle 70 élastique déterminent en partie les frottements lors de l'accostage de la rondelle 70 par la masse 52.

Avantageusement, la face 78 oblique de la masse 52 forme par rapport au plan d'oscillation un angle aigu qui est compris entre 30° et 60° et de préférence sensiblement égal à 45°.

L'effet d'amortissement selon l'invention est obtenu par friction, c'est-à-dire par un frottement mécanique, lorsque la face 78 de la masse 52 entre en contact et se déplace en comprimant progressivement la rondelle 70 élastique jusqu'à atteindre l'état comprimé de la rondelle 70 correspondant à la deuxième position illustrée à la figure 5.

En variante non représentée, la surface de frottement destinée à coopérer avec la face 78 de la masse 52 appartient à une pièce intermédiaire et non directement à l'organe déformable élastiquement.

Une partie de l'énergie cinétique de la masse 52 est dissipée par friction entre ces deux pièces et une autre partie de l'énergie est encore absorbée par la rondelle 70 élastique lors de la course de compression.

En effet, la rondelle 70 élastique ne restitue ensuite à la décompression qu'une partie seulement de l'énergie emmagasinée lors de la compression de sorte que l'énergie cinétique de la masse 52 va être réduite au fur et à mesure par la répétition des courses de compression jusqu'à ce que la masse 52 n'oscille plus au-delà de la position angulaire déterminée.

Lors de la décompression et du retour vers la première position correspondant à l'état d'attente, la rondelle 70 élastique ne restitue avantageusement à la masse 52 par l'intermédiaire de la face 78 oblique de cette dernière en contact avec la rondelle 70 qu'une partie de l'énergie absorbée lors de ladite course de compression.

La rondelle 70 élastique exerce un effort de rappel sur la face 78 oblique de la masse 52 qui permet, après la dissipation d'énergie par frottement, de remettre la rondelle 70 élastique dans sa première position initiale correspondant à l'état d'attente. Ainsi, il est possible de procéder de nouveau à un ou plusieurs amortissements par friction successifs de la masse 52 jusqu'à ce que ladite masse 52 n'oscille plus au-delà de la position angulaire déterminée.

L'inclinaison de la face 78 de la masse 52 participe également à éviter tout coincement de la masse 52 et donc à la libération de la rondelle 70 élastique après la course de compression.

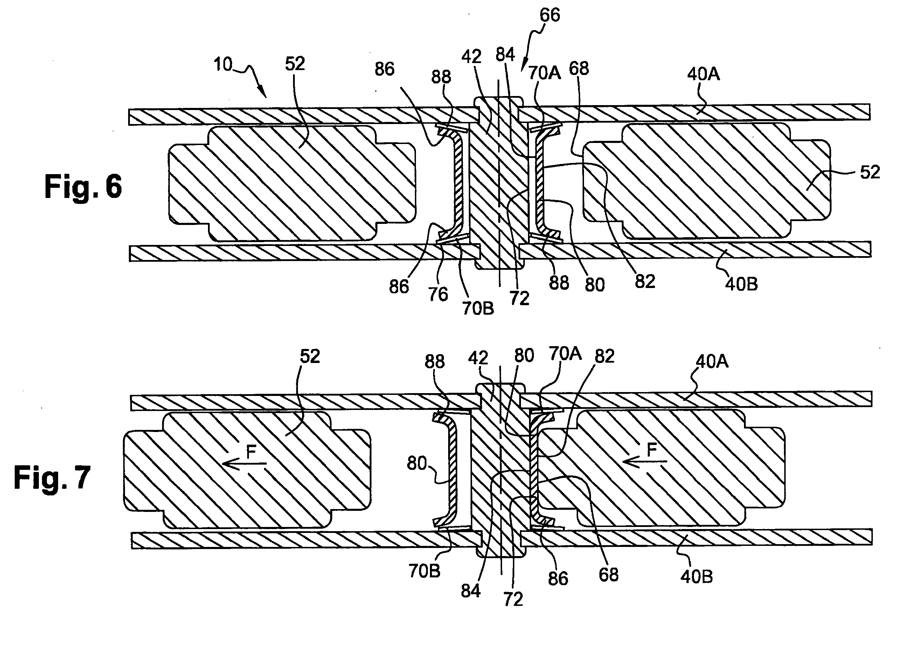

On décrira ci-après, par comparaison avec le premier mode de réalisation, un deuxième mode de réalisation qui est plus particulièrement représenté aux figures 6 et 7.

Dans ce deuxième mode de réalisation, une pièce 80 intermédiaire est interposée entre la masse 52 et l'entretoise 42 formant les moyens 66 de butée de fin de course.

De préférence, la pièce 80 intermédiaire est formée par un tube épaulé qui est traversé axialement par l'entretoise 42.

Le tube formant la pièce 80 intermédiaire entoure circonférentiellement l'entretoise 42 avec un jeu qui est déterminé pour permettre d'effectuer la course de compression dudit au moins un organe 70 déformable élastiquement entre sa première position et sa deuxième position correspondant à l'état comprimé et ceci avant d'arriver en butée.

Avantageusement, ledit au moins un organe 70 déformable élastiquement est doublé et les moyens d'amortissement par frottement mécanique sont donc constitués par deux rondelles élastiques tronconiques, respectivement référencées 70A et 70B.

Les rondelles 70A, 70B élastiques sont disposées axialement l'une en face de l'autre, à chaque extrémité de l'entretoise 42 et la pièce 80 intermédiaire est pincée entre elles.

La pièce 80 intermédiaire comporte une face 82 d'appui au contact de laquelle la face 68 de la masse 52 vient lorsque ladite masse 52 oscille au-delà de ladite position angulaire déterminée.

La pièce 80 intermédiaire comporte encore, opposée à la face 82, une face 84 qui est en vis-à-vis de la face 72 de butée de l'entretoise 42.

Le tube épaulé formant la pièce 80 intermédiaire comporte à chaque extrémité une collerette 86, lesdites collerettes 86 étant reliées axialement par un tronçon central s'étendant entre les rondelles 40A, 40B de phasage qui forment les éléments de support du dispositif 10 de filtration.

Chacune des rondelles 70A, 70B élastiques est respectivement en appui d'un côté sur la face 76 de celle adjacente des rondelles 40A, 40B de phasage et de l'autre sur l'une des collerettes 86 du tube.

De préférence, les rondelles 70A, 70B élastiques sont légèrement précontraintes de manière à maintenir le tube formant la pièce 80 intermédiaire dans une position d'équilibre représentée à la figure 6 correspondant à la première position et l'état d'attente de chacune des rondelles 70A, 70B élastiques.

Avantageusement, chaque collerette 86 n'est pas orthogonale au tronçon central du tube d'orientation axiale mais inclinée d'un angle déterminé afin de réaliser un contact oblique entre une face 88 annulaire de compression portée par chaque collerette 86 et chacune des rondelles 70A, 70B élastiques, la collerette 86 et chaque rondelle 70 présentant une forme tronconique.

Tel qu'illustré par la figure 6, lorsque chacune des rondelles 70A, 70B élastiques est dans sa première position, l'ensemble de chaque face 88 de compression de la pièce 80 intermédiaire est en contact avec celle des rondelles 70A, 70B élastiques qui lui est associée, grâce à quoi un effet d'amortissement par friction est obtenu en proportion de la surface de frottement déterminée par le contact entres les rondelles 70A, 70B élastiques et chaque face 88 annulaire de compression.

Par comparaison avec le premier mode de réalisation, la masse 52 ne requiert pas d'usinage particulier notamment pour la réalisation de la face 78 oblique destinée à venir au contact de la rondelle 70 élastique pour réaliser par frottement la dissipation d'énergie.

Avantageusement, la pièce 80 intermédiaire est réalisée dans un matériau choisi en dehors de toute autre considération et peut en conséquence être obtenue par un procédé de fabrication garantissant une précision de la géométrie de la pièce, en particulier de la collerette 86 annulaire.

De plus, la pièce 80 peut subir des traitements de surface pour améliorer le coefficient de frottement des faces 88 d'appui destinées à coopérer avec les rondelles 70A, 70B élastiques.

L'effet d'amortissement par friction est obtenu de la même manière que pour le premier mode de réalisation. La masse 52 oscillant au-delà de la position déterminée vient heurter la pièce 80 intermédiaire, la face 68 de la masse 52 entre en contact avec la face 82 de la pièce 80, ce qui provoque le déplacement de la pièce 80, selon la même direction que la masse 52, soit suivant la flèche F orthogonalement à la direction axiale.

Le déplacement de la pièce 80 intermédiaire en direction de l'entretoise 42 se fait à l'encontre de la charge exercée par les rondelles 70A, 70B élastiques qui pincent la pièce 80 intermédiaire et s'accompagne de frottements se produisant entre les faces 88 d'appui des collerettes 86 et les rondelles 70A, 70B élastiques grâce à quoi un effet d'amortissement par friction est obtenu et au moins une partie de l'énergie cinétique de la masse 52 dissipée.

La pièce 80 intermédiaire comprime chacune les rondelles 70A, 70B élastiques suivant une course de compression correspondant au passage de la première position (état d'attente) illustrée à la figure 6 à la deuxième position (état comprimé) illustrée à la figure 7.

Lorsque les rondelles 70A, 70B élastiques sont à l'état comprimé, globalement planes, la face 84 de la pièce 80 intermédiaire est alors en butée contre la face 72 de butée de l'entretoise 42 formant les moyens 66 de butée de fin de course.

Les rondelles 70A, 70B élastiques exercent alors sur les faces 88 d'appui un effort de rappel du fait de l'énergie absorbée lors de la course de compression et provoque le retour de la masse 52 avec une énergie cinétique moindre.

Les rondelles 70A, 70B élastiques comme la pièce 80 intermédiaire reviennent alors respectivement dans les positions initiales illustrées à la figure 6, soit la première position pour chacune des rondelles 70A, 70B élastiques, et les moyens d'amortissement formés par la pièce 80 et les rondelles 70A, 70B sont alors prêtes à être de nouveau sollicitées par la masse 52 pour autant que cette dernière oscille encore au-delà de la position angulaire déterminée.

L'inclinaison des collerettes 86 du tube dont la face 88 d'appui est en contact avec la surface tronconique des rondelles 70A, 70B élastiques accompagne, par un effet rampe, le retour à l'état initial.

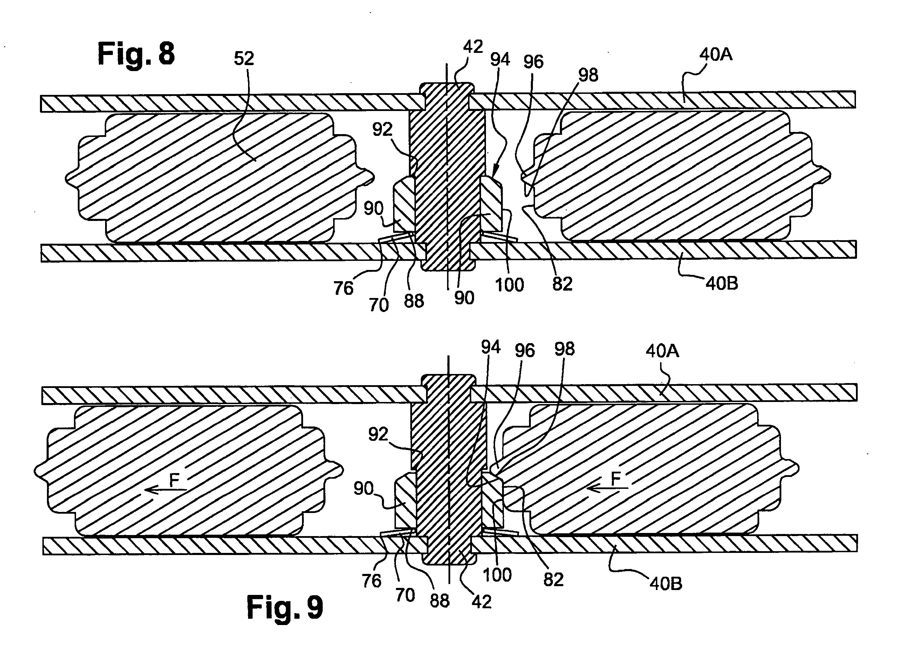

On décrira ci-après, par comparaison avec les premier et deuxième modes de réalisation, un troisième mode de réalisation qui est représenté aux figures 8 et 9.

Dans ce troisième mode de réalisation, ledit au moins un organe 70 déformable élastiquement est constitué par une rondelle 70 élastique, ayant de préférence une forme tronconique comme précédemment.

La rondelle 70 élastique est destinée à être comprimée par une pièce intermédiaire 90 qui est montée mobile en translation et est destinée à être déplacée par ladite au moins une masse 52 de sorte que la masse 52 ne coopère pas directement avec rondelle 70 élastique.

Avantageusement, la pièce intermédiaire 90 est une bague qui est montée coulissante axialement sur l'entretoise 42 à l'encontre de l'organe 70 déformable élastiquement formé par la rondelle.

La rondelle 70 élastique est interposée axialement entre la face 76 de la rondelle 40B de phasage et une face 88 annulaire d'appui que comporte la pièce intermédiaire 90 à l'une arrière de ses extrémités axiales.

Contrairement au deuxième mode de réalisation, la face 88 d'appui de la pièce 80 intermédiaire est une face plane qui s'étend dans un plan orthogonal à la direction axiale. La face 88 est en contact avec la partie sommitale de la rondelle 70 élastique lorsque ladite rondelle 70 occupe la première position illustrée à la figure 8 et correspondant à l'état d'attente.

L'entretoise 42 comporte un épaulement 92 contre lequel l'autre extrémité axiale avant de la pièce intermédiaire 90 est en butée du fait de la sollicitation exercée sur la face 88 d'appui par la rondelle 70 élastique tronconique, de préférence légèrement précontrainte.

La pièce intermédiaire 90 mobile est apte à coulisser axialement sur l'entretoise 42 pour venir comprimer sélectivement la rondelle 70 élastique à l'encontre de sa charge.

Le coulissement de la pièce intermédiaire 90 est provoqué par la masse 52 lorsque la masse 52 vient à osciller au-delà de la position angulaire déterminée pour laquelle il y a intervention des moyens 66 de butée de fin de course.

La masse 52 provoque le coulissement axial de la pièce 90 intermédiaire en la heurtant, le déplacement de ladite pièce 90 intermédiaire correspondant à la course de compression de la rondelle 70 élastique entre la première position représentée sur la figure 8 et la deuxième position représentée à la figure 9.

Dans ce troisième mode de réalisation, les frottements mécaniques permettant dissiper de l'énergie, et ce faisant d'obtenir l'effet d'amortissement par friction, se produisent principalement entre la masse 52 et la pièce 90 intermédiaire.

La pièce intermédiaire 90 comporte une face 94 de frottement inclinée par rapport à la direction axiale tandis que la masse 52 comporte une partie saillante 96 présentant une face 98 de frottement.

Par comparaison avec les modes de réalisation précédents, la surface de frottement est ici principalement réalisée sur la pièce 90 intermédiaire qui intervient donc dans la dissipation d'énergie par frottements.

Avantageusement, l'angle d'inclinaison de la face 94 de frottement et de la face 98 sont complémentaires de manière à obtenir une coopération entre elles de type "rampe" lors de l'accostage de la pièce 90 intermédiaire par la partie saillante 96 solidaire de la masse 52, grâce à quoi les frottements obtenus dissipent alors une partie de l'énergie cinétique de la masse 52 avant sa venue en butée.

De préférence, l'angle d'inclinaison des faces 94, 98 est égal à 45° par rapport au plan d'oscillation de la masse 52 orthogonal à l'axe X de rotation.

La partie saillante 96 forme une protubérance qui s'étend au-delà de la face 82 de la masse 52 destinée, après intervention des moyens d'amortissement par frottement selon l'invention, à venir en butée contre une face 100 de butée située en vis-à-vis et qui est portée par la pièce 90 intermédiaire.

Dans ce troisième mode de réalisation, les moyens 66 de butée de fin de course ne sont donc pas constitués par l'entretoise 42, du moins pas directement, la pièce 90 intermédiaire portant la face 100 de butée étant cependant montée sur ladite entretoise 42.

L'effet d'amortissement par friction, grâce auquel la dissipation d'une partie de l'énergie cinétique de la masse 52 est obtenue, résulte essentiellement des frottements produits par la coopération des faces 94 et 98 de frottement de la pièce 90 intermédiaire et de la partie saillante 96 de la masse 52.

Le fonctionnement est similaire à celui des modes de réalisation précédents, lors de l'accostage de la pièce intermédiaire 90 par la partie saillante 96 de la masse 52 se déplaçant suivant la flèche F, des frottements se produisent entre la face 98 de la partie saillante 96 de la masse 52 et la face 94 de la pièce 90 intermédiaire et en réalisant parallèlement la course de compression de la rondelle 70 élastique.

En effet, la rondelle 70 élastique tend à s'opposer au coulissement de la pièce 90 intermédiaire que provoque l'accostage par la partie saillante 96.

L'accostage de la pièce 90 intermédiaire par la partie saillante 96 provoque, à l'encontre de la rondelle 70, le coulissement de la pièce intermédiaire 90 de la position initiale vers la position finale.

L'énergie transmise par la masse 52, par l'intermédiaire de la partie saillante 96, à la pièce 90 intermédiaire mobile est en effet supérieure à la charge exercée sur ladite pièce intermédiaire 90 par la rondelle 70.

Par conséquent, la rondelle 70 élastique est comprimée par la face 88 d'appui de la pièce intermédiaire 90 selon une course de compression correspondant au coulissement axial de la pièce intermédiaire 90 de la position initiale illustrée à la figure 8 à la position finale illustrée à la figure 9.

La rondelle 70 élastique va ensuite restituer une partie seulement de l'énergie absorbée lors de la course de compression afin de rappeler automatiquement la pièce 90 intermédiaire vers sa position initiale représentée à la figure 8, grâce à quoi les moyens d'amortissement sont "réarmés" et susceptibles d'intervenir de nouveau.

On obtient ainsi un effet d'amortissement par friction permettant de réduire l'énergie cinétique de la masse 52 avant que, le cas échéant, la face 82 de la masse 52 ne viennent, en fin de course après amortissement, en butée contre la face 100 de butée que porte par la pièce intermédiaire 90.

Grâce à l'invention, on diminue l'intensité du choc de la masse 52 contre les moyens 66 de butée formés par la pièce 90 intermédiaire et l'entretoise 42, et on atténue également le bruit en résultant.

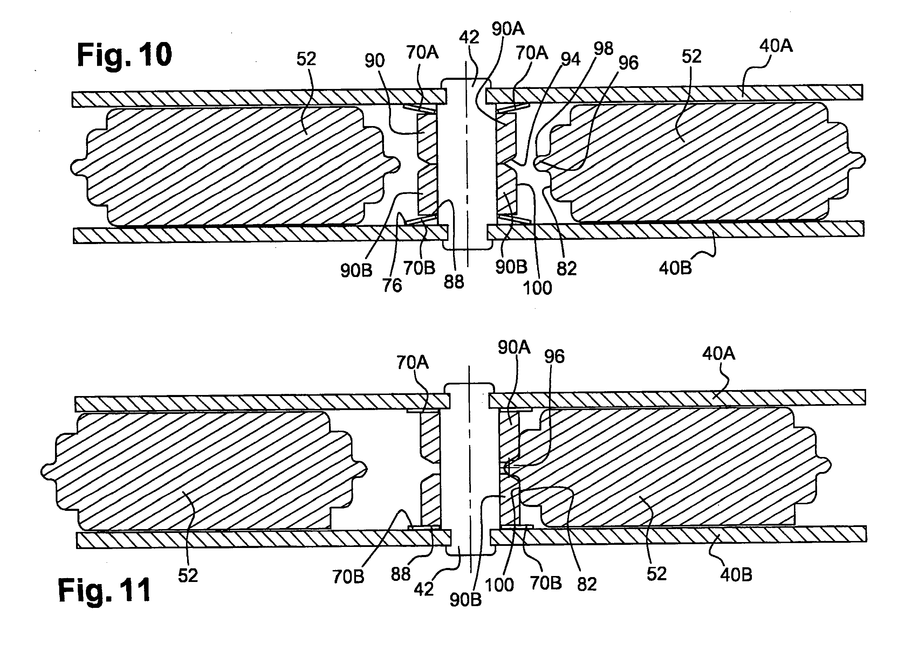

On a représenté aux figures 10 à 12 une variante du troisième mode de réalisation qui sera décrit ci-après par comparaison.

Dans cette variante, ledit au moins un organe 70 déformable élastiquement est doublé et les moyens d'amortissement par frottement mécanique comportent ainsi deux rondelles élastiques ici encore tronconiques, référencées respectivement 70A et 70B comme précédemment pour le second mode de réalisation des figures 6 et 7 et qui sont montées de la même manière que la rondelle 70 élastique du troisième mode de réalisation.

La pièce 90 intermédiaire est également doublée, respectivement formée d'une première pièce 90A intermédiaire associée à la rondelle 70A et d'une deuxième pièce 90B associée à la rondelle 70B.

L'entretoise 42 ne comporte cependant pas d'épaulement 92 comme dans le troisième mode de réalisation, les pièces 90A, 90B intermédiaires sont en effet sollicitées axialement l'une contre l'autre par les deux rondelles 70A et 70B élastiques, avantageusement précontraintes.

La position initiale des pièces 90A, 90B intermédiaires illustrées à la figure 10 correspond à une position d'équilibre résultant des efforts de sens opposés appliqués par les rondelles 70A et 70B élastiques sur les faces 98 d'appui respectives.

Le fonctionnement des moyens d'amortissement est le même que précédemment pour le troisième mode de réalisation mais les frottements obtenus sont plus importants car se produisant entre deux faces 98 de frottement de la partie saillante 96 de la masse 52 et la face 94 de frottement de chacune des pièces 90A, 90B intermédiaires.

Lors de l'accostage la partie saillante 96 provoque l'écartement axial des pièces 90A, 90B intermédiaires, respectivement vers l'avant et vers l'arrière et ceci à l'encontre des rondelles 70A et 70B élastiques qui absorbe une partie de l'énergie lors de la compression.

Chacune des rondelles 70A et 70B élastiques effectue une course de compression depuis la première position et jusqu'à atteindre la deuxième position illustrée à la figure 11 et correspondant à son état comprimé.

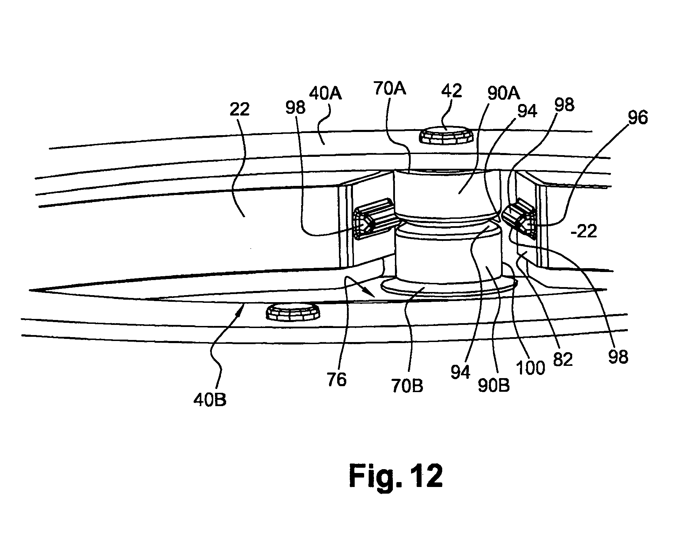

La figure 12 illustre plus particulièrement la partie saillante 96 qui s'étend selon la direction radiale sur tout ou partie de la hauteur de la masse 52.

La partie saillante 96 présente de préférence une forme de coin dont les faces 98 déterminent un profil pointu en "V", la réunion des faces 94 de frottement des pièces 90A, 90B intermédiaires présentant également une forme en "V".

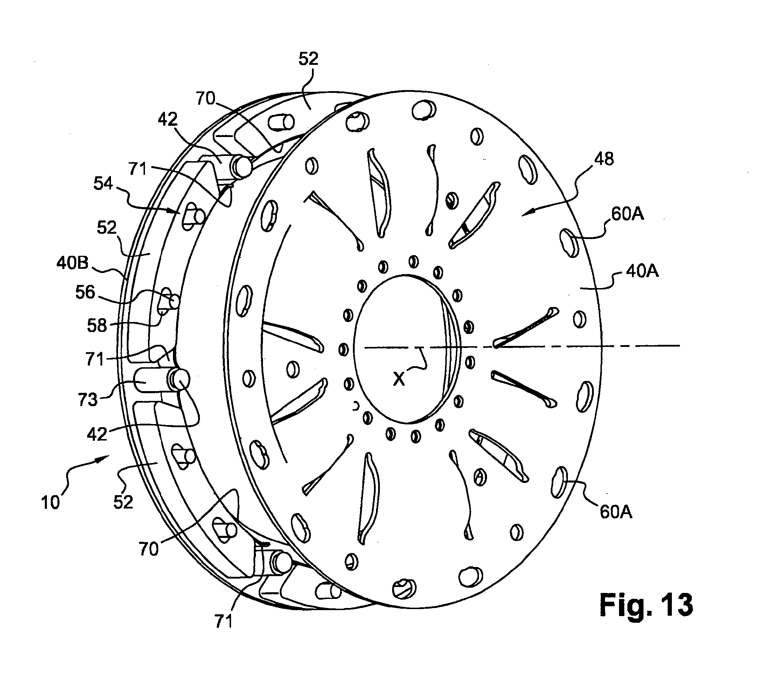

On décrira maintenant en référence aux figures 13 à 16, un quatrième mode de réalisation d'un dispositif 10 de filtration selon la première conception, c'est-à-dire comportant au moins une masse 52 interposée axialement entre deux éléments de support tels que des rondelles 40A, 40B de phasage d'un système 12 d'amortissement.

Par conséquent, ce quatrième mode de réalisation sera décrit par comparaison avec les modes de réalisation précédents.

Dans ce quatrième mode de réalisation, les moyens 70 d'amortissement comportent au moins un organe déformable élastiquement.

L'organe déformable élastiquement est ici une lame élastique qui est fixée à la masse 52 de sorte que ladite lame élastique est liée en déplacement à la masse 54 lorsque cette dernière oscille en fonctionnement.

La lame élastique 70 est rapportée à fixation sur la partie radialement interne de la masse 52 par tout moyen approprié, par exemple par soudage ou par cloutage.

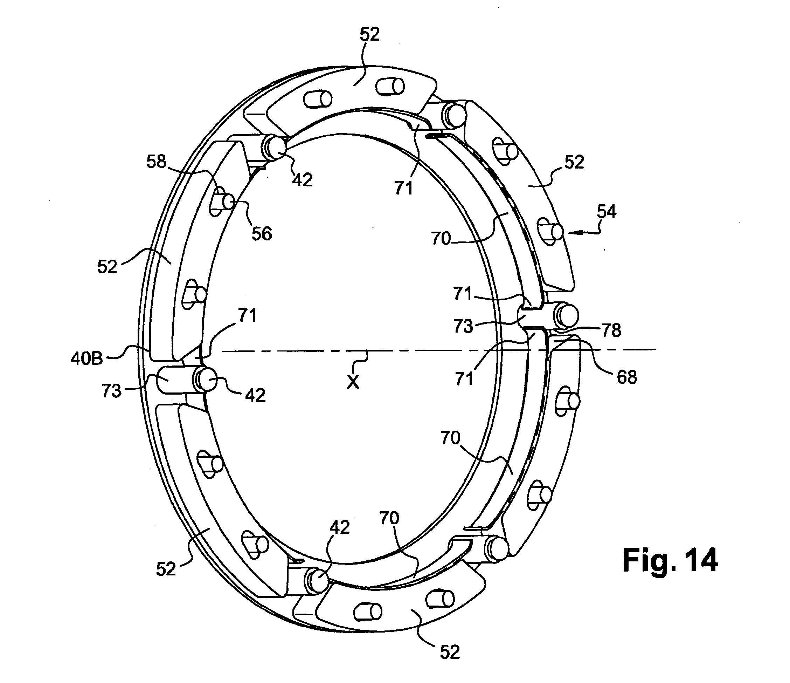

La lame élastique 70 s'étend circonférentiellement au-delà de chacune des extrémités de la masse 52 et présente un tronçon 71 libre de débattre à chacune de ses extrémités, lesquels tronçons 71 sont plus particulièrement visibles sur la figure 14 sur laquelle la rondelle 40A de phasage n'est pas représentée.

La masse 52 comporte à chacune de ses extrémités circonférentielles une face 68 de butée destinée à venir buter en fin de course contre une face ou surface 72 portée par l'entretoise 42 formant les moyens 66 de butée de fin de course.

Avantageusement, les moyens 66 de butée de fin de course comporte une entretoise 42 à laquelle appartient la surface 72 de butée pour la masse 52.

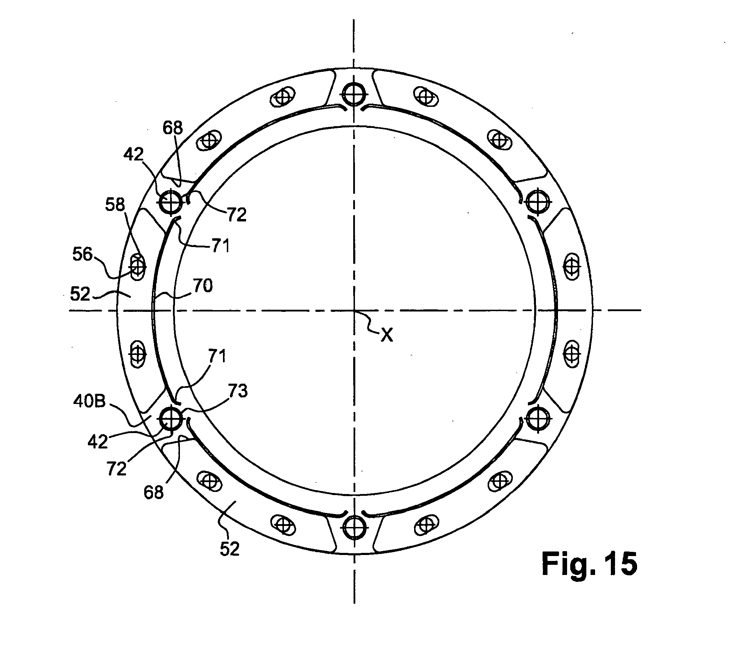

Comme on peut le voir sur la figure 15, lorsque la lame élastique 70 est dans l'état d'attente et occupe la première position, le tronçon 71 est totalement libre et n'est pas en contact avec l'entretoise 42 formant les moyens 66 de butée de fin de course.

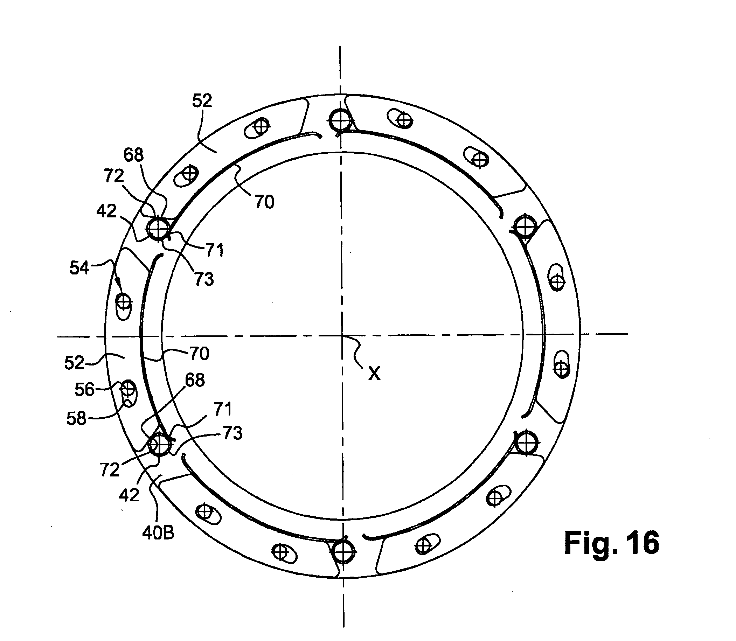

En revanche et comme on peut le voir sur la figure 16, lorsque la lame élastique 70 est dans l'état comprimé et occupe la deuxième position, le tronçon 71 est en contact avec l'entretoise 42 qui vient frotter, à la manière d'un archet, contre la surface externe de l'entretoise 42. L'entretoise 42 étant fixe, le tronçon 71 de la lame élastique 70 est sollicité radialement vers l'axe X de rotation d'un débattement correspondant à la course de compression.

Le fonctionnement des moyens d'amortissement est le suivant.

Lorsqu'une masse 52 oscille au-delà de la position angulaire déterminée, le tronçon 71 de la lame élastique 70 se rapproche de l'entretoise 42 jusqu'à venir frotter contre la surface 73 cylindrique externe et les frottements répétés au gré des oscillations de la masse 52 vont permettre de dissiper une partie de l'énergie cinétique.

Il résulte de la coopération entre le tronçon 71 de la lame élastique 70 et l'entretoise 42 un effet d'amortissement par friction grâce auquel la masse 52 est ralentie, l'énergie cinétique de ce corps en mouvement dissipée, ce qui permet avantageusement d'amortir le choc et d'atténuer le bruit lors de la venue en butée de la face 68 de la masse 52 contre la face 78 de l'entretoise.

Lorsque la lame élastique 70 est dans la deuxième position, le tronçon 71 est comprimé de sorte que la position n'est pas une position stable, en effet la lame élastique 70 ayant absorbée de l'énergie lors de la course de compression tend alors à rappeler la masse 52 vers une position en deçà de la position angulaire déterminée pour laquelle les moyens d'amortissement selon l'invention et les moyens 66 de butée de fin de course interviennent.

La course de compression de la lame élastique 70 s'effectue globalement selon la direction radiale, de l'extérieur vers l'intérieur soit en direction de l'axe X de rotation.

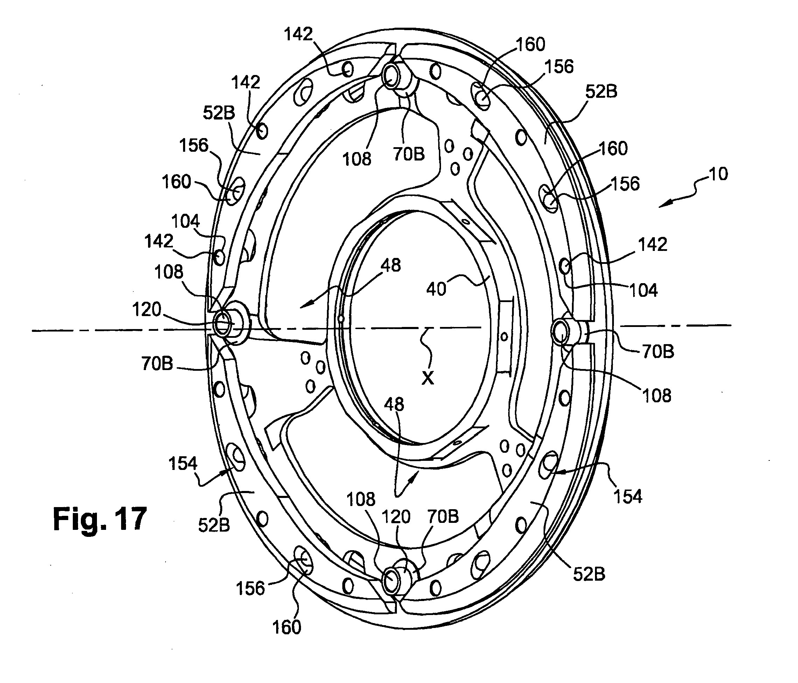

On a représenté sur les figures 17 à 20 suivantes un dispositif 10 de filtration selon une deuxième conception.

Par comparaison avec la première conception, la deuxième conception du dispositif 10 de filtration se caractérise par le fait que chaque masse 52 est constituée de deux masselottes, respectivement référencées 52A et 52B, qui sont agencées axialement de part et d'autre d'un élément de support.

Avantageusement, le dispositif 10 de filtration est associé à un système 12 d'amortissement (non représenté) analogue à celui décrit précédemment à titre d'exemple en référence aux figures 1 à 3.

De préférence, ledit élément de support est constitué par une rondelle 40 de phasage du système 12 d'amortissement et les paires de masselottes 52A, 52B formant les masses 52 sont réparties circonférentiellement de manière régulière autour de l'axe X de rotation.

Bien entendu, l'élément de support est fonction de la conception du système 12 d'amortissement et le dispositif 10 de filtration est de préférence lié à l'élément de sortie du système 12 d'amortissement.

La rondelle 40 formant l'élément de support comporte notamment trois fenêtres 48 réparties à 120° qui sont destinées à recevoir des organes élastiques 18 à action circonférentielle.

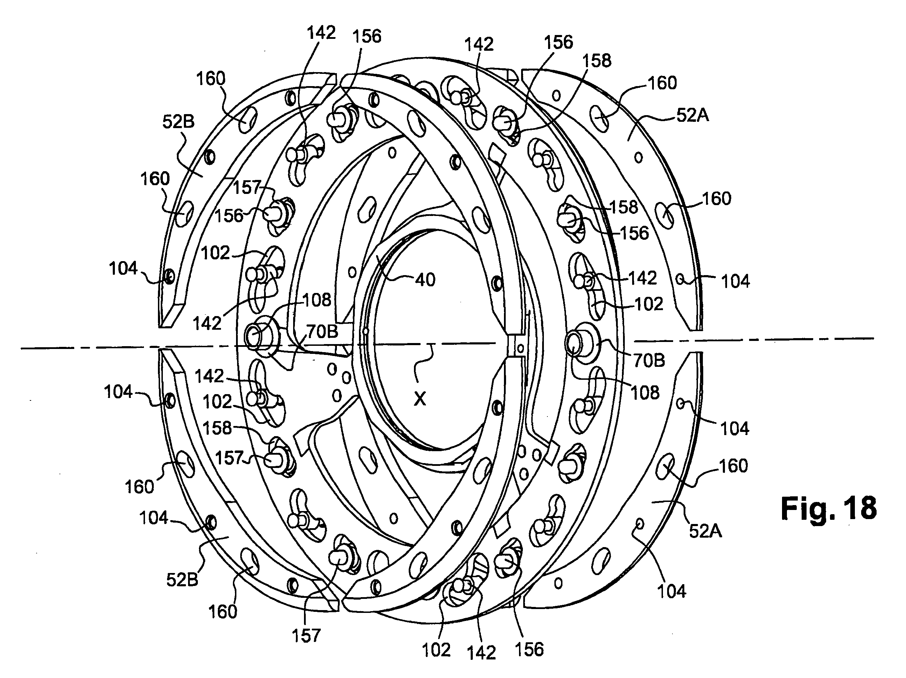

Dans l'exemple de réalisation d'un dispositif 10 de filtration selon cette deuxième conception, les masses 52 sont au nombre de quatre comme cela est plus particulièrement visible sur les figures 17 et 18.

Les masselottes 52A, 52B sont reliées axialement entre elles par des entretoises 142, ici au nombre de trois entretoises 142 reliant les masselottes d'une masse 52.

L'élément de support du dispositif 10 de filtration, formé par exemple par la rondelle 40, comporte des ouvertures 102 pour permettre le passage desdites entretoises 142 qui traversent ainsi axialement l'élément de support et relient rigidement la paire de masselottes d'une masse 52. Chaque masselotte 52A, 52B comporte encore des trous 104, les extrémités des entretoises 142 étant de préférence liées aux masselottes à la manière d'un rivet.

Les entretoises 142 déterminent l'écartement axial entre les masselottes et les ouvertures 102 sont réalisées de manière à permettre aux masselottes d'osciller selon le plan d'oscillation orthogonal à l'axe X de rotation.

Le dispositif 10 de filtration comporte encore des moyens 154 de guidage des masselottes 52A, 52B par rapport à l'élément de support.

Les moyens 154 de guidage sont par exemple constitués par des éléments de roulement similaires à ceux décrits précédemment pour le dispositif de filtration selon la première conception.

Les moyens 154 de guidage sont formés par des rouleaux 156 dont une partie centrale de guidage est reçue dans une ouverture 158 associée de l'élément 40 de support ayant par exemple une forme de fente oblongue.

Les extrémités axiales de chaque rouleau 156 sont reçues à jeu dans des ouvertures 160 réalisées dans chacune des masselottes 52A et 52B.

De préférence, chaque paire de masselottes 52A, 52B est guidée par deux rouleaux 156 de sorte que le dispositif 10 de filtration est un pendule de type bifilaire.

Chaque rouleau 156 comporte des moyens d'arrêt destinés à maintenir axialement la partie centrale de guidage dans l'ouverture 158 associée de l'élément 40 de support.

Les moyens d'arrêt sont destinés à limiter le déplacement axial du rouleau 156 et sont par exemple réalisés sous la forme de collerettes 157 qui sont plus particulièrement visibles sur la figure 18.

La fonction de butée de fin de course des masselottes 52A, 52B n'est ici pas réalisée par les entretoises 142 en relation avec les ouvertures 102 de passage.

Selon l'invention, le dispositif 10 de filtration comporte des moyens 70 d'amortissement qui sont aptes à produire un effet d'amortissement par friction pour dissiper par frottement au moins une partie de l'énergie cinétique de la masse réalisée en deux parties sous la forme de masselottes 52A, 52B.

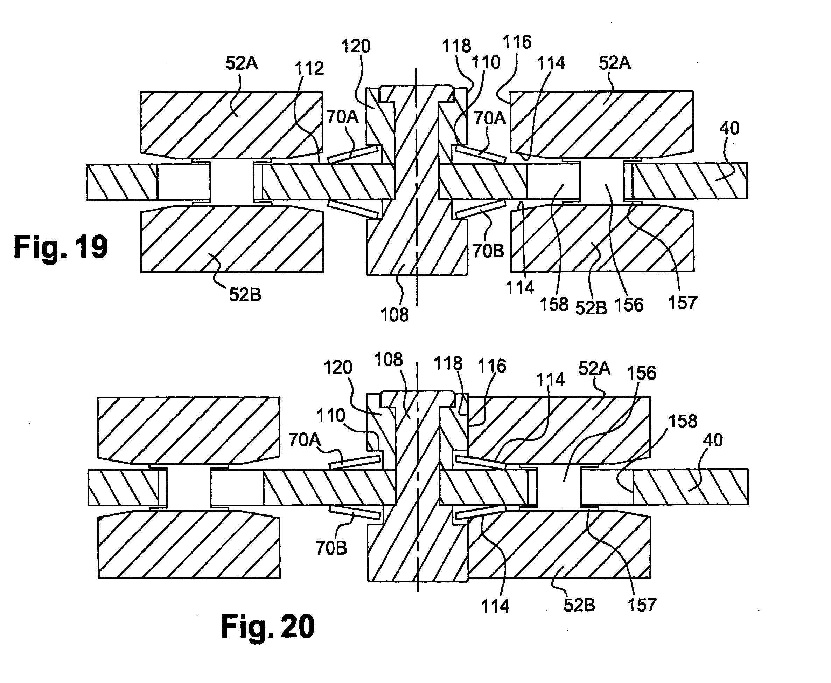

Les figures 19 et 20 représentent en détail un cinquième mode de réalisation des moyens d'amortissement par frottement mécanique.

Les moyens d'amortissement comportent deux organes déformables élastiquement constitués par deux rondelles 70A et 70B élastiques de forme tronconique.

Les rondelles 70A et 70B élastiques sont montées par l'intermédiaire d'une colonnette 108 qui traverse axialement et solidaire de l'élément 40 de support.

Le montage des rondelles 70A et 70B élastiques est similaire à celui décrit précédemment pour le premier mode de réalisation avec un dispositif 10 de filtration selon la première conception. De plus, les rondelles 70A et 70B élastiques sont montées de la même manière, la description faite ci-après pour l'une seulement valant pour l'autre.

La colonnette 108 comporte un épaulement 110 contre lequel la partie sommitale de la rondelle 70 élastique en appui, l'autre partie formant la base de la rondelle 70 prenant appui contre une face 112 de l'élément 40 de support.

Les masselottes 52A, 52B comportent chacune une face 114 oblique ménagée à chaque extrémité de la masselotte, du côté adjacent à l'élément 40 de support.

Le fonctionnement est analogue à celui du premier mode de réalisation, exception faite du doublement de la rondelle 70 élastique.

Les rondelles 70A et 70B élastiques occupent une première position correspondant à l'état d'attente, tel qu'illustré par la figure 19.

Lorsque les masselottes 52A et 52B formant la masse 52 oscillent circonférentiellement au-delà d'une position angulaire déterminée, les rondelles 70A et 70B vont alors être accostées par les masselottes, plus précisément chacune par la face 114 oblique de chaque masselotte.

La face 114 oblique de chaque masselotte vient alors frotter contre la rondelle 70 élastique provoquant un changement d'état, la rondelle 70 passant de l'état d'attente à l'état comprimé correspondant à la deuxième position illustrée sur la figure 20.

Le frottement entre chaque face 114 oblique d'une masselotte avec la rondelle 70 élastique associée permet de dissiper une partie de l'énergie cinétique de la masse et d'obtenir l'effet d'amortissement par friction selon l'invention.

Les masselottes 52A, 52B compriment les rondelles 70A, 70B jusqu'à ce que les masselottes arrivent en butée, la face 116 de chaque masselotte butant contre une face 118 en vis à vis de la colonnette 108.

De préférence, la colonnette 108 comporte deux bagues 120 auxquelles appartiennent les faces 118 de butée contre lesquelles les faces 118 des masselottes 52A, 52B viennent buter en fin de course après la compression de la rondelle 70 élastique.

Avantageusement, la bague 120 est réalisée en tout ou en partie en matériau élastomère de manière à atténuer les bruits générés par le contact entre les faces 116 et 118 en évitant un contact "métal-métal".

## Revendications

1. Dispositif (10) de filtration de type oscillateur pendulaire, notamment pour une transmission de véhicule automobile, ayant un axe (X) de rotation et comportant :
- au moins un élément (40) de support apte à être entraîné en rotation autour de l'axe (X) de rotation,
- au moins une masse (52) apte à osciller, par rapport audit élément (40) de support, dans un plan d'oscillation orthogonal à l'axe (X) de rotation,
- des moyens (56) de guidage de la masse (52) par rapport à l'élément (40) de support intervenant entre ledit au moins un élément (40) de support et ladite au moins une masse (52), et
- des moyens (66) de butée de fin de course aptes à limiter, en fonctionnement, les oscillations de ladite au moins une masse (52) par rapport audit au moins un élément (40) de support, le dispositif (10) de filtration comportant des moyens (70) d'amortissement qui sont aptes à produire sélectivement un effet d'amortissement par friction pour dissiper par frottement mécanique au moins une partie de l'énergie de ladite au moins une masse (52), **caractérisé en ce que** lesdits moyens d'amortissement comportent au moins un organe (70) déformable élastiquement qui est apte à occuper respectivement au moins un état d'attente et un état comprimé et **en ce que**, lorsque ladite au moins une masse (52) oscille circonférentiellement au-delà d'une position angulaire déterminée, ledit au moins un organe (70) déformable élastiquement est comprimé, entre une première position et une deuxième position, suivant une course de compression au cours de laquelle ledit organe (70) dissipe de l'énergie par frottement mécanique de manière à produire ledit effet d'amortissement par friction de ladite au moins une masse (52) et **en ce que**
, oscillant au-delà d'une position déterminée, ladite au moins une masse (52) provoque la compression dudit au moins un organe (70) déformable élastiquement suivant une course de compression qui est perpendiculaire au plan d'oscillation de ladite au moins une masse (52).

2. Dispositif (10) de filtration selon la revendication 1, **caractérisé en ce que** ledit au moins un organe (70) déformable élastiquement est comprimé directement par ladite au moins une masse (52).

3. Dispositif (10) de filtration selon l'une des revendications 1 à 2, **caractérisé en ce que** ledit au moins un organe (70) déformable élastiquement est comprimé par une pièce (80) intermédiaire avec laquelle coopère ladite au moins une masse (52).

4. Dispositif (10) de filtration selon la revendication 2 ou 3, **caractérisé en ce que** ladite au moins une masse (52) comporte au moins une face (68) oblique qui est destinée à coopérer avec ledit au moins un organe (70) déformable élastiquement ou ladite pièce (80) intermédiaire.

5. Dispositif (10) de filtration selon la revendication 3, **caractérisé en ce que** ladite au moins une masse (52) comporte une partie saillante (96) apte à coopérer avec la pièce (80) intermédiaire et **en ce que** ladite pièce (80) intermédiaire, montée mobile perpendiculairement au plan d'oscillation de ladite au moins une masse (52), est apte à comprimer ledit au moins un organe (70) déformable élastiquement suivant la course de compression.

6. Dispositif (10) de filtration selon l'une quelconque des revendications 1 à 5, **caractérisé en ce que** ledit au moins un organe (70) déformable élastiquement est lié en déplacement audit au moins un élément (40) de support.

7. Dispositif (10) de filtration selon l'une quelconque des revendications 1 à 6, **caractérisé en ce que** ledit au moins un organe (70) déformable élastiquement est lié en déplacement à ladite au moins une masse (52).

8. Dispositif (10) de filtration selon l'une quelconque des revendications 1 à 7, **caractérisé en ce que** ledit au moins un organe (70) déformable élastiquement est constitué par au moins une rondelle élastique tronconique ou une lame élastique.

9. Dispositif (10) de filtration selon l'une des revendications 1 à 8, **caractérisé en ce que** le dispositif de filtration comporte un premier organe déformable élastiquement et un deuxième organe déformable élastiquement.

## Patentansprüche

1. Filtervorrichtung (10) von der Art Pendeloszillator, insbesondere für ein Kraftfahrzeuggetriebe, die eine Drehachse (X) hat und aufweist:
- mindestens ein Stützelement (40), das um die Drehachse (X) in Drehung versetzt werden kann,
- mindestens eine Masse (52), die bezüglich des Stützelements (40) in einer Schwingebene orthogonal zur Drehachse (X) schwingen kann,
- Einrichtungen (56) zur Führung der Masse (52) bezüglich des Stützelements (40), die zwischen dem mindestens einen Stützelement (40) und der mindestens einen Masse (52) eingreifen, und
- Endanschlagseinrichtungen (66), die im Betrieb die Schwingungen der mindestens einen Masse (52) bezüglich des mindestens einen Stützelements (40) begrenzen können, wobei die Filtervorrichtung (10) Dämpfungseinrichtungen (70) aufweist, die selektiv eine Reibungsdämpfungswirkung erzeugen können, um mindestens einen Teil der Energie der mindestens einen Masse (52) durch mechanische Reibung abzuführen,
**dadurch gekennzeichnet, dass** die Dämpfungseinrichtungen mindestens ein elastisch verformbares Organ (70) aufweisen, das mindestens einen Wartezustand bzw. einen komprimierten Zustand einnehmen kann, und dass, wenn die mindestens eine Masse (52) in Umfangsrichtung über eine bestimmte Winkelstellung hinaus schwingt, das mindestens eine elastisch verformbare Organ (70) zwischen einer ersten und einer zweiten Stellung gemäß einem Kompressionshub komprimiert wird, während dessen das Organ (70) Energie durch mechanische Reibung abführt, um die Reibungsdämpfungswirkung der mindestens einen Masse (52) zu erzeugen, und dass die mindestens eine Masse (52), wenn sie über eine bestimmte Stellung hinaus schwingt, die Komprimierung des mindestens einen elastisch verformbaren Organs (70) gemäß einem Kompressionshub bewirkt, der zur Schwingebene der mindestens einen Masse (52) lotrecht ist.

2. Filtervorrichtung (10) nach Anspruch 1, **dadurch gekennzeichnet, dass** das mindestens eine elastisch verformbare Organ (70) direkt von der mindestens einen Masse (52) komprimiert wird.

3. Filtervorrichtung (10) nach einem der Ansprüche 1 bis 2, **dadurch gekennzeichnet, dass** das mindestens eine elastisch verformbare Organ (70) von einem Zwischenbauteil (80) komprimiert wird, mit dem die mindestens eine Masse (52) zusammenwirkt.

4. Filtervorrichtung (10) nach Anspruch 2 oder 3, **dadurch gekennzeichnet, dass** die mindestens eine Masse (52) mindestens eine schräge Seite (68) aufweist, die dazu bestimmt ist, mit dem mindestens einen elastisch verformbaren Organ (70) oder mit dem Zwischenbauteil (80) zusammenzuwirken.

5. Filtervorrichtung (10) nach Anspruch 3, **dadurch gekennzeichnet, dass** die mindestens eine Masse (52) einen vorstehenden Teil (96) aufweist, der mit dem Zwischenbauteil (80) zusammenwirken kann, und dass das Zwischenbauteil (80), das lotrecht zur Schwingebene der mindestens einen Masse (52) beweglich montiert ist, das mindestens eine elastisch verformbare Organ (70) gemäß dem Kompressionshub komprimieren kann.

6. Filtervorrichtung (10) nach einem der Ansprüche 1 bis 5, **dadurch gekennzeichnet, dass** das mindestens eine elastisch verformbare Organ (70) in Bewegung mit dem mindestens einen Stützelement (40) verbunden ist.

7. Filtervorrichtung (10) nach einem der Ansprüche 1 bis 6, **dadurch gekennzeichnet, dass** das mindestens eine elastisch verformbare Organ (70) in Bewegung mit der mindestens einen Masse (52) verbunden ist.

8. Filtervorrichtung (10) nach einem der Ansprüche 1 bis 7, **dadurch gekennzeichnet, dass** das mindestens eine elastisch verformbare Organ (70) aus mindestens einer kegelstumpfförmigen elastischen Scheibe oder aus einer elastischen Lamelle besteht.

9. Filtervorrichtung (10) nach einem der Ansprüche 1 bis 8, **dadurch gekennzeichnet, dass** die Filtervorrichtung ein erstes elastisch verformbares Organ und ein zweites elastisch verformbares Organ aufweist.

## Claims

1. Filtration device (10) of swinging oscillator type, in particular for a motor vehicle transmission, having an axis (X) of rotation and comprising:
- at least one support element (40) able to be rotated about the axis (X) of rotation,
- at least one mass (52) able to oscillate, with respect to the said support element (40), in an oscillation plane orthogonal to the axis (X) of rotation,
- means (56) for guiding the mass (52) with respect to the support element (40), acting between the said at least one support element (40) and the said at least one mass (52), and
- end-of-travel stop means (66) able to limit, during operation, the oscillations of the said at least one mass (52) with respect to the said at least one support element (40), the filtration device (10) comprising damping means (70) which are able to selectively produce a friction damping effect to dissipate by mechanical friction at least part of the energy of the said at least one mass (52), **characterized in that** the said damping means comprise at least one elastically deformable member (70) which is able to respectively occupy at least one standby state and a compressed state and **in that**, when the said at least one mass (52) oscillates circumferentially beyond a defined angular position, the said at least one elastically deformable member (70) is compressed, between a first position and a second position, along a compression travel in the course of which the said member (70) dissipates energy by mechanical friction so as to produce the said friction damping effect on the said at least one mass (52) and **in that**,
oscillating beyond a defined position, the said at least one mass (52) compresses the said at least one elastically deformable member (70) along a compression travel which is perpendicular to the oscillation plane of the said at least one mass (52).

2. Filtration device (10) according to Claim 1, **characterized in that** the said at least one elastically deformable member (70) is compressed directly by the said at least one mass (52).

3. Filtration device (10) according to either of Claims 1 and 2, **characterized in that** the said at least one elastically deformable member (70) is compressed by an intermediate part (80) with which the said at least one mass (52) cooperates.

4. Filtration device (10) according to Claim 2 or 3, **characterized in that** the said at least one mass (52) comprises at least one oblique face (68) which is intended to cooperate with the said at least one elastically deformable member (70) or the said intermediate part (80).

5. Filtration device (10) according to Claim 3, **characterized in that** the said at least one mass (52) comprises a projecting portion (96) able to cooperate with the intermediate part (80) and **in that** the said intermediate part (80), mounted moveably perpendicularly to the oscillation plane of the said at least one mass (52), is able to compress the said at least one elastically deformable member (70) along the compression travel.

6. Filtration device (10) according to any one of Claims 1 to 5, **characterized in that** the said at least one elastically deformable member (70) is connected in movement to the said at least one support element (40).

7. Filtration device (10) according to any one of Claims 1 to 6, **characterized in that** the said at least one elastically deformable member (70) is connected in movement to the said at least one mass (52).

8. Filtration device (10) according to any one of Claims 1 to 7, **characterized in that** the said at least one elastically deformable member (70) is formed by at least one frustoconical elastic washer or an elastic blade.

9. Filtration device (10) according to one of Claims 1 to 8, **characterized in that** the filtration device comprises a first elastically deformable member and a second elastically deformable member.
